# EUROPEAN PATENT SPECIFICATION

(11) **EP 2 026 172 B1**
(45) Date of publication and mention of the grant of the patent: **21.07.2010**
(21) Application number: 08169726.0
(22) Date of filing: 10.12.2004
(51) Int. Cl.: G06F 3/033, H04M 1/247, G06F 1/16

(54) **Scroll wheel with character input**
Rollrad mit Zeicheneingabe
Molette de défilement à entrée de caractères

(30) Priority: 04.06.2004 US 576583 P
(43) Date of publication of application: 18.02.2009
(62) Divisional of application: 04802286.7
(73) Proprietor: RESEARCH IN MOTION LIMITED, Waterloo, Ontario N2L 3W8 (CA)
(72) Inventor: Pletikosa, Velimir, Kitchener, Ontario N2M 2Z9 (CA)
(74) Representative: Patel, Binesh

(56) References cited:
- EP-A- 0 585 730
- EP-A- 0 901 262
- EP-A- 1 111 879
- EP-A- 1 143 327
- WO-A-02/05079
- US-A- 5 825 353
- US-A- 5 931 873
- US-A1- 2002 044 136
- GOOD TECHNOLOGY: "G100 Wireless Handheld" INTERNET CITATION, [Online] 2003, XP007903779 Retrieved from the Internet: URL:http://www.preferredtechnology.com/sol utions/internet/goodlink/good_g 100_datasheet.pdf> [retrieved on 2008-01-09]

## Description

The present invention relates generally to on-screen navigation control and character input for computer devices.

Compact electronic devices such as personal digital assistants (PDAs), cell phones, pagers, organizers and wireless mobile computing devices generally have limited surface area on which user input keys and buttons can be located. Devices having on-screen navigation typically have a plurality of keys dedicated to cursor or caret movement control. For example, right, left, up and down navigation control keys are often grouped close together. Such devices may also include separate keys for character entry, for example a QWERTY style keyboard, or a telephone-keypad layout. The use of a large number of keys takes up valuable space on compact electronic devices, and can increase tooling and manufacturing costs.

Thus, there is a need for a keyboard configuration for a compact electronic device having reduced space requirements while at the same time is cost effective to manufacture and is comfortable and efficient to use.

US-A-5825353 discloses a personal digital assistant having a thumbwheel which can be pressed as well as rotated to assist in navigation around a menu, in particular for inputting characters including a space character.

US-A-2002/0044136 illustrates a hand held device having a thumb wheel for user input. It is suggested that the thumbwheel could be located in the front surface of the device, where an alphabetical keyboard is also positioned.

EP-A-1143327 shows a hand held device with a thumb wheel and an alphanumeric keypad in which a user can cycle through data by pressing a control key and simultaneously rolling the thumb wheel. The control key may be the "alt" key.

WO-A-02/05079 discloses graphical user interfaces for hand held devices. Here overlay menus are used in a complex menu structure and scrolling is done using arrow keys.

EP-A-1111879 describes a telephone having a scroll wheel on a side of the handheld device.

US-A-5931873 describes a handheld electronic device having a keyboard and a scroll wheel in which the scroll wheel is located on a side of the device.

Good Technology, G100 Wireless Handheld, 2003, XP007903779, describes a handheld electronic device having a keyboard and a scroll wheel located in a front face of the device. The scroll wheel is located towards the top of the keyboard, between the keyboard and the display.

EP-A-0585730 describes a standalone keyboard for a desktop computer which includes a dial wheel.

EP-A-0901262 describes a menu navigation key for a telephone handset. The key is located in the front surface of the handset between a display and a group of alphanumeric keys. That is, the navigation key is located towards the top of the group of keys.

### GENERAL

The invention is defined by the appended claims.

According to the invention a scroll wheel positioned on the face of an electronic device may be used for both character entry and for on-screen navigation.

According to the invention there is provided a hand-held electronic device, comprising: a device housing having a face; a display screen mounted within the face; a keyboard mounted within the face in a position between a top edge and a bottom edge of the face and below the display screen, the keyboard comprising a plurality of alphanumeric keys arranged in a plurality of rows across the face, the keys generating corresponding input signals when activated; a scroll wheel assembly comprising a scroll wheel mounted within the face in a space bar key location relative to the keyboard position closer to the bottom edge than at least some of the alphanumeric keys, the scroll wheel being rotatably and depressably mounted for rotation about an axis in a first direction towards the top edge of the face and in an opposite second direction towards the bottom edge, the scroll wheel assembly comprising a rotation sensor for detecting rotation of the scroll wheel in the first and second directions and generating corresponding input signals, and a depression sensor for detecting depression of the scroll wheel and generating a corresponding input signal; and a processor coupled to the display screen for controlling the operation thereof and coupled to the keyboard and scroll wheel assembly for receiving the input signals generated thereby, the processor for, in a text entry mode: (i) displaying a plurality of characters in a text field on the display screen; (ii) displaying an on-screen indicator on the display screen in a current input location in the text field; (iii) adding a space character to the display field at the current input location and advancing the on-screen indicator in response to depression of the scroll wheel; and (iv) moving the on-screen indicator through the text field in response to rotation of the scroll wheel.

According to the invention there is provided a method of operating a handheld electronic device comprising a device housing having a face, a display screen mounted within the face; a keyboard mounted within the face in a position between a top edge and a bottom edge of the face and below the display screen, the keyboard comprising a plurality of alphanumeric keys arranged in a plurality of rows across the face, the keys generating corresponding input signals when activated; a scroll wheel assembly comprising a scroll wheel mounted within the face in a space bar key location relative to the keyboard, the scroll wheel being rotatably and depressably mounted for rotation about an axis in a first direction towards the top edge of the face and in an opposite second direction towards the bottom edge, the scroll wheel assembly comprising a rotation sensor for detecting rotation of the scroll wheel in the first and second directions and generating corresponding input signals, and a depression sensor for detecting depression of the scroll wheel and generating a corresponding input signal; and a processor coupled to the display screen for controlling the operation thereof and coupled to the keyboard and scroll wheel assembly for receiving the input signals generated thereby, the method comprising: in a text entry mode: (i) displaying a plurality of characters in a text field on the display screen; (ii) displaying an on-screen indicator on the display screen in a current input location in the text field; (iii) adding a space character to the display field at the current input location and advancing the on-screen indicator in response to depression of the scroll wheel; and (iv) moving the on-screen indicator through the text field in response to rotation of the scroll wheel. There is also provided a computer readable medium storing program code for causing a handheld electronic device to perform the method described above.

### BRIEF DESCRIPTION OF THE DRAWINGS

Example embodiments will now be described with reference to the attached Figures, wherein:

Figure 1 is a block diagram of a mobile device and a communications system to which embodiments of the present invention may be applied;

Figure 2 is a front or plan view of a mobile device according to example embodiments;

Figures 3 - 6 show examples of visual user interface as displayed on a display screen of the device of Figure 2;

Figure 7 is a partial sectional view the device, taken along lines vii-vii of Figure 2, showing a scroll wheel assembly thereof;

Figure 8 is a partial sectional view of the device, taken along the lines vii-vii of Figure 2, showing the scroll wheel assembly in a depressed state;

Figure 9 is a partial sectional view of the device showing a side of the scroll wheel assembly; and

Figure 10 is a block diagram of an example scroll wheel control circuit for the device.

Like reference numerals are used throughout the Figures to denote similar elements and features.

### DESCRIPTION OF PREFERRED EMBODIMENTS

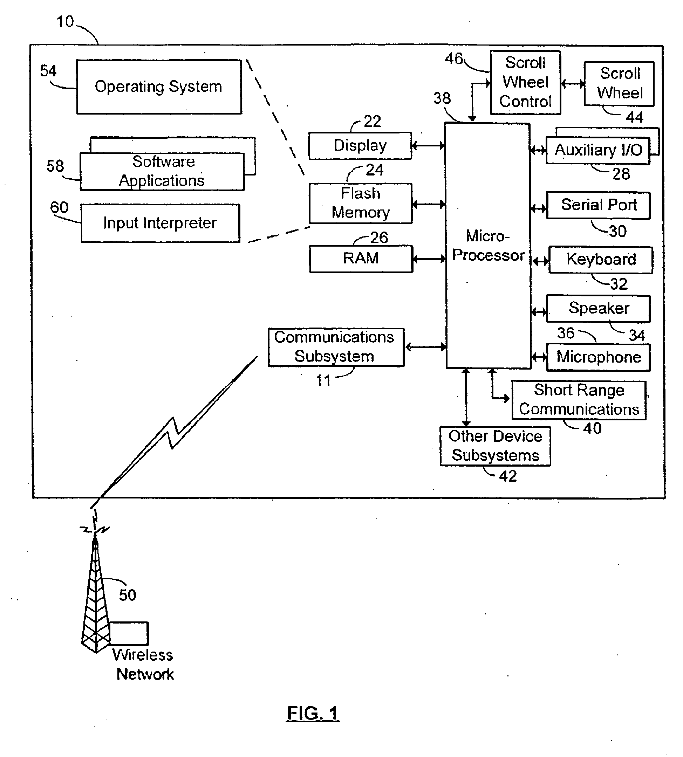

Referring to Figure 1, there is a block diagram of a mobile device 10 to which example embodiments of the present invention may be applied. In one example embodiment, the mobile device 10 is a hand-held two-way mobile communication device 10 having at least data and possibly also voice communication capabilities. In an example embodiment, the device has the capability to communicate with other computer systems on the internet. In various embodiments, mobile device 10 is a data communication device, a multiple-mode communication device configured for both data and voice communication, a mobile telephone, a PDA (either enabled or not enabled for wireless communications), 1-way or 2-way pagers and/or any type of mobile electronic device having a keyboard or keypad and on-screen display. In the presently described embodiment, the mobile device 10 is configured to operate within a wireless network 50.

The device 10 includes a communication subsystem 11 for communicating with the wireless network 50. As will be apparent to those skilled in the field of communications, the particular design of the communication subsystem 11 will be dependent upon the communication network in which the device is intended to operate. Wireless mobile network 50 is, in an example embodiment, a wireless packet data network which provides radio coverage to mobile devices 10, although it could be any other types of wireless networks.

The device 10 includes a microprocessor 38 that controls the overall operation of the device. The microprocessor 38 interacts with communications subsystem 11 and also interacts with further device subsystems such as the display 22, flash memory 24, random access memory (RAM) 26, auxiliary input/output (I/O) subsystems 28, scroll wheel assembly 44, serial port 30, keyboard or keypad 32, speaker 34, microphone 36, a short-range communications subsystem 40, and any other device subsystems generally designated as 42.

Some of the subsystems shown in Fig. 1 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Operating system software 54 and various software applications 58 used by the microprocessor 38 are, in one example embodiment, stored in a persistent store such as flash memory 24 or similar storage element. Those skilled in the art will appreciate that the operating system 54, specific device applications 58, or parts thereof, may be temporarily loaded into a volatile store such as RAM 26. It is contemplated that received communication signals may also be stored to RAM 26.

The microprocessor 38, in addition to its operating system functions, preferably enables execution of software applications 58 on the device. A predetermined set of applications 58 which control basic device operations, including at least data and voice communication applications for example, will normally be installed on the device 10 during manufacture. Further applications may also be loaded onto the device 10 through the network 50, an auxiliary I/O subsystem 28, serial port 30, short-range communications subsystem 40 or any other suitable subsystem 42, and installed by a user in the RAM 26 or a nonvolatile store for execution by the microprocessor 38.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items such as email messages for example, using the keyboard 32 in conjunction with the display 22 and possibly an auxiliary I/O device 28. Such composed items may then be transmitted over a communication network through the communication subsystem 11.

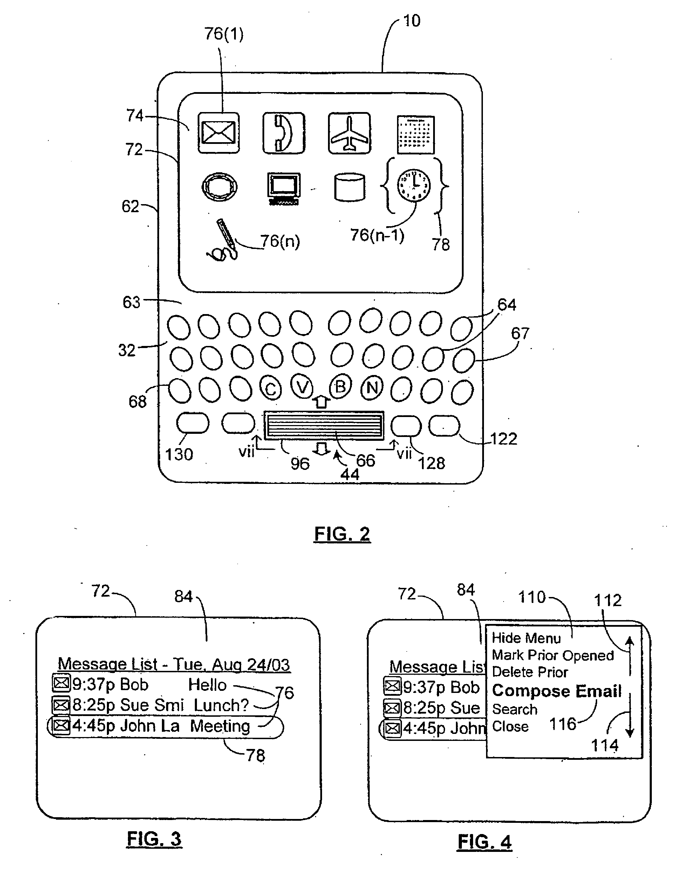

With reference to Figure 2, in an example embodiment, the components and subsystems of mobile device 10 are housed within a rigid case 62 that is configured to be held with one or two hands while the device 10 is in use. The mobile device 10 is, in various example embodiments, small enough to fit inside a standard purse or suit jacket pocket. In an example embodiment, the keyboard 32 is horizontally positioned symmetrically between a left edge and a right edge of a face 63 of the device 10. The keyboard 32 includes character input buttons or keys for user input of displayable characters, such as substantially similarly sized alphanumeric buttons or keys 64. The keyboard 32 also includes non-alphanumeric command or control buttons or keys such as line feed or enter key 67, ALT key 68, ESC key 128 and shift key 130. In the example embodiment of Figure 2, the keys on the face of device 10 are positioned to be actuated by the thumbs of the user while the back of the device 10 is supported by the fingers of the user. In one example embodiment, alphanumeric keys 64 and space bar key 66 are arranged in a QWERTY-style or Dvorak-style keyboard having the plurality of alphanumeric keys 64 arranged in a plurality of rows across the face 63 of case 62. Alternative keyboard layouts and configurations are used in other embodiments of device 10.

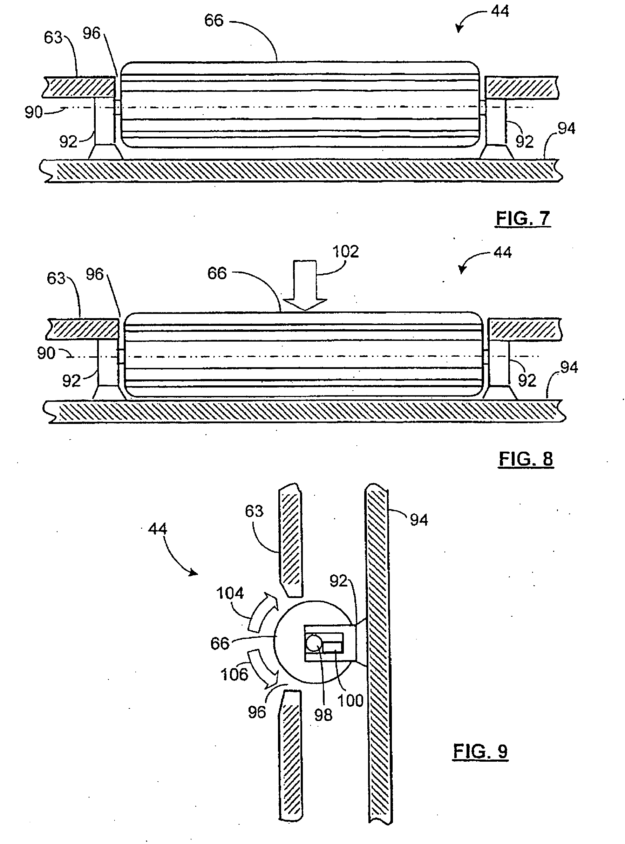

According to the present invention, the device 10 includes a combined space bar and navigation scroll wheel assembly 44. The assembly 44 includes an elongate rotatable scroll wheel 66 centrally located below the lowest row of alphanumeric keys 64 in the location that is typically associated with a space bar position. For example, scroll wheel 66 in one QWERTY style embodiment is located below the "C", "V", "B" and "N" character input keys, closer to the bottom edge of the face 63 than the letter keys. The scroll wheel 66 can be rotated upwards towards an upper end of the device or downwards towards a bottom end of the device, as indicated by the arrows shown in Figure 2. As shown in Figures 7, 8 and 9, the scroll wheel 66 is mounted by a scroll switch assembly 92 to a printed circuit board 94 to rotate about an axis 90. The circuit board 94 is mounted within the device housing case 62 and a portion of the scroll wheel 66 protrudes through an elongate rectangular opening 96 that is provided through the face 63 of housing case 62 for manipulation by a thumb (or other digit) of a user of the device 10.

The scroll switch assembly 90 supports both ends of the scroll wheel 66 and includes a rotating encoder switch 98 for detecting switch inputs when the scroll wheel 66 is rotated about axis 96. The rotating encoder switch 98 can take various forms - by way of non-limiting examples, it may include mechanical, optical and/or magnetic sensors for detecting rotation of the scroll wheel 66. The scroll switch assembly 90 is arranged to permit the scroll wheel 66 to be displaced towards the circuit board 94 when a depression force is applied to the scroll wheel. In this regard, Figure 8 shows the scroll wheel 66 in a depressed state, displaced towards the circuit board 94 by a force applied in the direction of arrow 102, and Figure 7 shows the scroll wheel 66 in its normal resting position into which it is biased away from the circuit board 94 by scroll wheel switch assembly 90. The scroll wheel switch assembly 90 includes a tactile contact switch 100 for detecting depression of the scroll wheel 66 and providing click-like tactile feedback to the user when the scroll wheel 66 is depressed. In example embodiments, the rotating encoder switch 98 also provides tactile feedback to the user by providing increased rotational resistance whenever a new switch point is hit during rotation of the scroll wheel 66. In various embodiments, other types of movement detectors such as optical or magnetic based sensors, for example, can be used in place of tactile contact switch 100 for sensing depression of the scroll wheel 66.

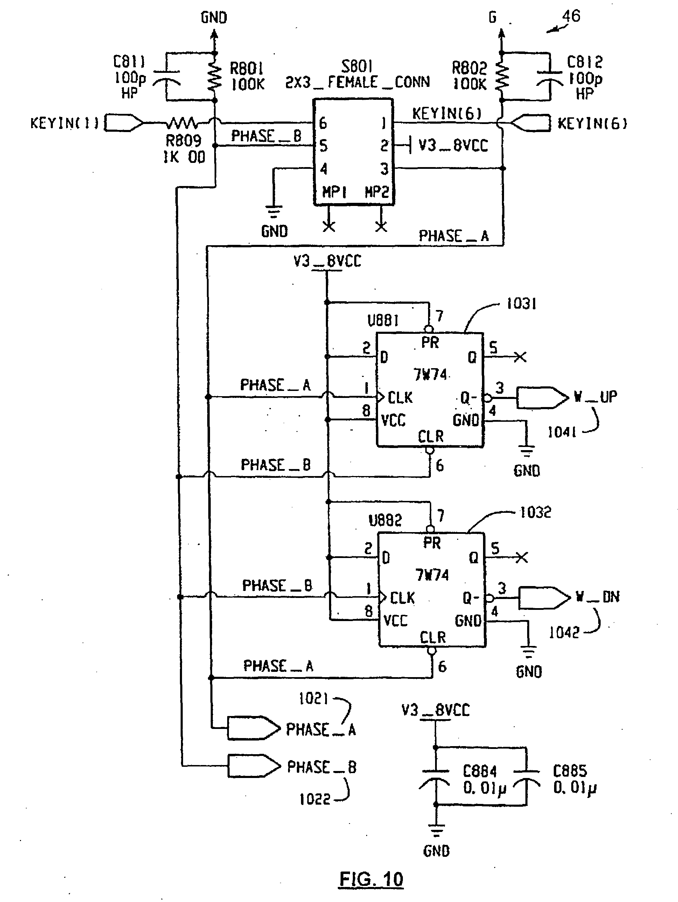

Figure 10 is an example of typical logic circuitry 46 associated with the rotating encoder switch 98 of scroll wheel assembly 44. This diagram is meant for example purposes only and as one skilled in the art would understand, logic circuitry for a scroll wheel is not limited to this example. The rotating encoder switch 98 of scroll wheel assembly 44 generates quadrature signals phase A 1021 and phase B 1022, which are processed by D flip-flops 1031 and 1032 to present signals 1041 W_UP and 1042 W_DN to microprocessor 38. Signals 1041 and 1042 represent, respectively, a user rolling the scroll wheel up (in the direction of arrow 104 of Figure 7) and rolling the scroll wheel down (in the direction of arrow 106 of Figure 7). As noted above, scroll wheel 66 has measurable rotatable and depressible input movements, and the tactile contact switch 100 provides a further input signal to the microprocessor 38 representing a user depressing the scroll wheel 66.

With reference to Figure 1, among the software applications or modules resident on device 10 is an input interpreter 60 that maps various inputs received by the microprocessor 38 from keyboard 32 and scroll wheel assembly 44 to associated character and control codes and provides such codes to the operating system 54 and/or software applications 58. In various embodiments, the functions of the input interpreter may be partly or completely integrated into the operating system 54 and/or other software applications 58.

With reference again to Figure 2, the display system 22 of the device 10 includes a display screen 72 that is vertically positioned between the keyboard 32 and a top edge of the device face and horizontally positioned symmetrically between the left edge and the right edge of the device face. In various non-limiting examples of alternative embodiments, the display screen 72 may be housed in a casing that is pivotally mounted to the casing housing the keyboard, or the keyboard may be divided into two sections in housing case 62 with the display screen being located between the keyboard sections.

The device 10 is configured to operate in different user input modes under the control operating system 54 and software applications 58. For example, Figure 2 shows a visual user interface 74 for an icon menu item selection mode in which a plurality of menu items 76 such as application or folder icons 76(1) to 76(n) (referred to generically herein by reference 76) are displayed, each of which is selectable to link to or launch an associated application or open an associated folder. According to example embodiments of the present invention, when the device 10 is operating in a menu item selection mode, a user can move an on-screen indicator 78, commonly referred to as a caret or cursor, through the menu items 76 by rotating the scroll wheel 66 up and down. When a menu item is highlighted or focussed by the on-screen indicator 78, clicking on or depressing the scroll key 66 results in selection of the focussed item. In the menu item selection mode, rotating the scroll wheel 66 up towards the top edge of the device causes the on-screen indicator 78 to move or scroll backwards through the menu items 76, and rotating the scroll wheel down towards the bottom edge caused the on-screen indicator 78 to move or scroll forwards through the menu items 76. In a user interface where the selectable menu items are displayed in a plurality of rows such as shown in Figure 2, scrolling backwards through the items will generally involve moving the on-screen indicator 78 from right to left over the items in a row. A line wrap around affect is achieved in that when the left-most item in a row is reached, the on-screen indicator 78 is then moved to the right-most item in the previous row. Forward scrolling has the opposite affect. In an example embodiment, pressing a designated control key, for example ALT key 68, while rotating the scroll wheel 66 in an icon menu selection mode causes the on-screen indicator 78 to move in a vertical direction through the menu icons, rather than horizontally. For example, rotating the scroll wheel 66 upwards towards the top edge of the device 10 with the ALT key 68 pressed will result in the on-screen indicator 78 moving upwards through a column of icons 76, and rotating the scroll wheel 66 downwards while pressing the ALT key 68 will result in the on-screen indicator 78 moving downwards through a column of icons 76. Thus, in such an embodiment, pressing and holding the ALT key 68 when in an icon menu selection mode causes the movement of on-screen indicator 78 to occur in a direction orthogonal to movement that occurs when the ALT key 68 is not pressed.

In yet a further example embodiment, when in menu item selection mode, a further user input is required in connection with operation of the scroll wheel 66 in order to reduce erroneous selections. For example, in one embodiment, while in a menu selection mode depression of a command key such as ALT key 68 (or other designated key) is required simultaneously with user manipulation of the scroll wheel 66 in order to activate the navigation and selection components of the scroll wheel. In such an embodiment, when in a menu selection mode, upward rotation or downward rotation of the scroll wheel 66 simultaneously with depression of the ALT key 68 results in a backward scroll or forward scroll, respectively, through the menu items 76; simultaneous depression of the scroll wheel 66 with the ALT key 68 results in selection of a focussed menu item 76; and movement of the scroll wheel 66 without simultaneous depression of the ALT key 68 is ignored by the device.

It will be appreciated that selectable menu items can be displayed in a number of different configurations on the display screen 72. For example, Figure 3 shows a further example of a menu item selection mode user interface 84 in which the selectable menu items 76 are mail message items arranged in a vertical list, each of which can be focussed on by on-screen indicator 78 and then selected to link to a full display of an associated mail message. Movement of the on-screen indicator 78 through the vertical list of menu items presented in interface 84 using scroll wheel 66, and selection of focussed menu items, is similar to the navigation through and selection of menu items described above in respect of interface 74, except that the on-screen indicator only moves upwards and downwards through the vertical list, rather than horizontally. Downward rotation of the scroll wheel 66 results in forward scrolling through the listed items, and backward rotation of the scroll wheel 66 results in backward scrolling through the listed items.

In some example embodiments, selectable menu items may appear in a drop-down, pull-down or pop-up style window that overlays part of the screen 72. Figure 4 shows an example of a pull-down overlay menu 110 that overlays interface 84. As can be seen In a pull-down menu mode, upward rotation of scroll wheel 66 moves an on-screen indicator 116 upwards through a list of selectable menu items in the direction of arrow 112, and downward rotation of the scroll wheel 66 moves the on-screen indicator 116 downwards through the list in the direction of arrow 114. In the embodiment shown in Figure 4, on-screen indicator 116 takes the form of bolding and enlarging the text of the currently focussed menu item. Pressing the scroll wheel 66 results in selection of the focussed menu item ("Compose Email") in the illustrated example. Pressing the ESC key 128 may, in some embodiments, close the pull-down menu. In some embodiments a designated key such as a MENU key 122 may be provided on keyboard 32 and pressing of such key brings down the appropriate pull-down menu 110 that corresponds to the current background interface that is displayed at the time that the MENU key 122 is pressed. In some embodiments, pressing of the MENU key 122 while already in a pull-down menu closes the pull-down menu. Although the pull-down menu 110 is shown in combination with message list user interface 84, pull-down menus will generally be accessible from many of the user interface displays available on device 10.

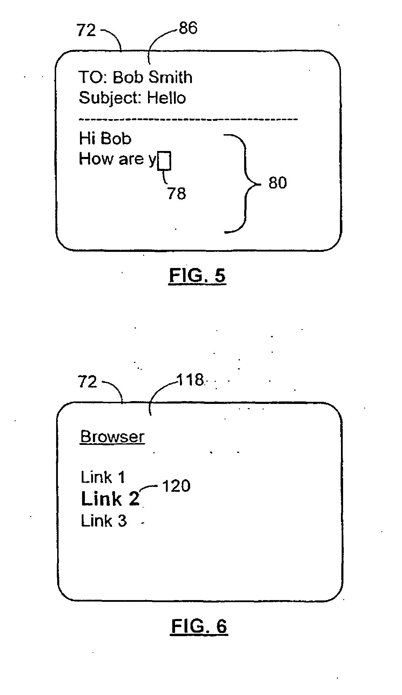

In addition to the various menu item selection modes described above, the device 10 can also function in a text input or entry mode. Several device applications will typically have an associated text entry mode - for example email message compose applications, task list compose applications, calendar applications and notepad applications. Figure 5 shows a text entry mode user interface 86 on display screen 72 that could be associated with an email compose application or other application that has a text entry mode. In such visual user interface a cursor or on-screen indicator 78 provides visual feedback as to the current input location in a text field 80. According to example embodiments of the invention, in a text entry input mode of device 10, the scroll wheel 66 has a navigational component for moving on-screen indicator 78 through the characters of the text field 80 in response to rotation of the scroll wheel 66, and the scroll wheel 66 also functions as a space character entry key.

In one example embodiment, when in text input mode, in order to minimize unintended navigational movements through the text field 80, activation of a command key such as ALT key 68 simultaneously with rotation of the scroll wheel 66 is required to activate the navigation features of the scroll wheel. In such embodiment, in text input mode: upward rotation of the scroll wheel 66 while the ALT key 68 is pressed results in movement of the on-screen indicator 78 backwards (ie. left) through the text field 80; downward rotation of the scroll wheel 66 while the ALT key 68 is pressed results in movement of the on-screen indicator 78 forwards (ie. right) through the text field; rotation of the scroll wheel in any direction without simultaneous depression of the ALT key 68 is ignored; depression of the scroll wheel 66 on its own results in addition of a space character in the text field 80 at the current location of the on-screen indicator 78, resulting in advancement of the on-screen indicator 78 to the next location in the text field; and depression of the scroll wheel 66 while the ALT key 68 is depressed is ignored, to prevent unwanted spaces from being entered while navigating through the text field.

In Web browser enabled device 10, one of the user interface screens presented in a browser mode will be a browser interface 118, a representation of which is shown in Figure 6. In browser mode, images, text and selectable links (represented by text or image icons) may be displayed on screen 72. Downward rotation of the scroll wheel 66 moves an on-screen indicator 120 forward through any displayed selectable objects, and upward rotation of the scroll wheel moves an on-screen indicator 120 backwards through the displayed selectable objects. Pressing the scroll wheel 66 selects the object that is currently focussed by on-screen indicator 120. Rotation of the scroll wheel 66 while the ALT key 68 (or other designated key) is pressed causes, in an example embodiment, selected text to be highlighted for subsequent copy operations.

In some example embodiments, the ESC Key 128 may have different functions in different modes. For example, in one embodiment when in an icon menu selection mode, pressing the ESC key 128 brings the user back to an upper level menu. In a drop-down menu mode, pressing the ESC key 128 closes the pull-down menu. In a text entry mode, pressing the ESC key 128 brings up a dialog box asking the user for additional actions.

The use of the scroll wheel for both a space character input key and as a navigational control and menu item selection tool useful in some embodiments as the space bar key is traditionally a larger and more visibly prominent key on a keyboard. However, in some embodiments, the scroll wheel may be combined with another character input key other than or in addition to the space bar key.

The above-described embodiments of the present invention are intended to be examples only. Alterations, modifications and variations may be effected to the particular embodiments by those skilled in the art without departing from the scope of the invention, which is defined by the claims appended hereto.

## Claims

1. A hand-held electronic device (10), comprising:
a device housing (62) having a face (63);
a display screen (72) mounted within the face;
a keyboard (32) mounted within the face in a position between a top edge and a bottom edge of the face and below the display screen, the keyboard comprising a plurality of alphanumeric keys (64) arranged in a plurality of rows across the face, the keys generating corresponding input signals when activated;
a scroll wheel assembly comprising a scroll wheel mounted within the face in a space bar key location relative to the keyboard position closer to the bottom edge than at least some of the alphanumeric keys, the scroll wheel being rotatably and depressably mounted for rotation about an axis in a first direction towards the top edge of the face and in an opposite second direction towards the bottom edge, the scroll wheel assembly comprising a rotation sensor for detecting rotation of the scroll wheel in the first and second directions and generating corresponding input signals, and a depression sensor for detecting depression of the scroll wheel and generating a corresponding input signal; and
a processor coupled to the display screen for controlling the operation thereof and coupled to the keyboard and scroll wheel assembly for receiving the input signals generated thereby, the processor for, in a text entry mode: (i) displaying a plurality of characters in a text field (80) on the display screen; (ii) displaying an on-screen position indicator (78) on the display screen in a current input location in the display field; (iii) adding a space character to the text field at the current input location and advancing the on-screen position indicator in response to depression of the scroll wheel; and (iv) moving the on-screen position indicator through the text field in response to rotation of the scroll wheel.

2. A handheld electronic device as claimed in claim 1, wherein the keyboard comprises a designated control key (68) and in the text entry mode, the processor is configured to move the on-screen position indicator in response to rotation of the scroll wheel only when the designated control key is activated at the same time that the scroll wheel is rotated.

3. A handheld electronic device as claimed in claim 1, wherein in the text entry mode, the processor is configured to add the space character to the text field at the current input location and advance the on-screen position indicator in response to depression of the scroll wheel only when the designated control key is not activated at the same time that the scroll wheel is depressed.

4. A handheld electronic device as claimed in claim 1 wherein the keyboard comprises a designated control key and when the designated control key is pressed, the processor is configured to cause an overlay menu (110) of selectable items to overlay a portion of a current user interface displayed on the display screen, wherein movement of the scroll wheel results in corresponding movement of an on-screen position indicator (116) throughout the overlay menu when the overlay menu is displayed.

5. A handheld electronic device as claimed in claim 1 wherein the keyboard has a QWERTY-style layout and the scroll wheel is positioned directly below "V" and "B" keys of the keyboard.

6. A method of operating a handheld electronic device (10) comprising a device housing having a face, a display screen (72) mounted within the face; a keyboard (32) mounted within the face in a position between a top edge and a bottom edge of the face and below the display screen, the keyboard comprising a plurality of alphanumeric keys arranged in a plurality of rows across the face, the keys generating corresponding input signals when activated; a scroll wheel assembly (44) comprising a scroll wheel mounted within the face in a space bar key location relative to the keyboard, the scroll wheel being rotatably and depressably mounted for rotation about an axis in a first direction towards the top edge of the face and in an opposite second direction towards the bottom edge, the scroll wheel assembly comprising a rotation sensor for detecting rotation of the scroll wheel in the first and second directions and generating corresponding input signals, and a depression sensor for detecting depression of the scroll wheel and generating a corresponding input signal; and a processor coupled to the display screen for controlling the operation thereof and coupled to the keyboard and scroll wheel assembly for receiving the input signals generated thereby, the method comprising:
in a text entry mode: (i) displaying a plurality of characters in a text field on the display screen; (ii) displaying an on-screen position indicator (78) on the display screen in a current input location in the text field; (iii) adding a space character to the display field at the current input location and advancing the on-screen position indicator in response to depression of the scroll wheel; and (iv) moving the on-screen position indicator through the text field in response to rotation of the scroll wheel.

7. A computer readable medium storing program code for causing a handheld electronic device to perform the method of claim 6.

## Patentansprüche

1. Tragbare Elektronikvorrichtung (10) mit
einem Vorrichtungsgehäuse (62), das eine Seite (63) aufweist,
einem Anzeigebildschirm (72), der in der Seite angebracht ist,
einer Tastatur (32), die in der Seite an einer Stelle zwischen einer oberen Kante und einer unteren Kante der Seite und unter dem Anzeigebildschirm angebracht ist, wobei die Tastatur mehrere alphanumerische Tasten (64) aufweist, die in mehreren Reihen über die Seite angeordnet sind, wobei die Tasten entsprechende Eingabesignale erzeugen, wenn sie aktiviert sind,
einer Scrollradbaugruppe, die ein Scrollrad enthält, das in der Seite an einem Leertastenort in Bezug auf die Tastaturposition näher an der unteren Kante als zumindest einige der alphanumerischen Tasten angebracht ist, wobei das Scrollrad zum Drehen um eine Achse in eine erste Richtung zur oberen Kante der Seite hin und in eine entgegengesetzte, zweite Richtung zur unteren Kante hin drehbar und drückbar angebracht ist, wobei die Scrollradbaugruppe einen Rotationssensor zur Rotationserfassung des Scrollrades in die erste und die zweite Richtung und zum Erzeugen entsprechender Eingabesignale und einen Drücksensor zur Drückerfassung des Scrollrades und zum Erzeugen eines entsprechenden Eingabesignals enthält, und
einem Prozessor, der zum Steuern dessen Betriebs mit dem Anzeigebildschirm verbunden ist und der zum Empfangen der von diesen erzeugten Eingabesignale mit der Tastatur und der Scrollradbaugruppe verbunden ist, wobei der Prozessor geeignet ist, in einem Texteingabemodus: (i) mehrere Zeichen in einem Textfeld (80) auf dem Anzeigebildschirm anzuzeigen, (ii) eine Auf-Bildschirm-Positions-Angabe (78) auf dem Anzeigebildschirm an einem aktuellen Eingabeort im Anzeigefeld anzuzeigen, (iii) als Reaktion auf ein Drücken des Scrollrades ein Leerzeichen zum Textfeld am aktuellen Eingabeort hinzuzufügen und die Auf-Bildschirm-Positions-Angabe vorzurücken und (iv) als Reaktion auf die Rotation des Scrollrades die Auf-Bildschirm-Positions-Angabe durch das Textfeld zu bewegen.

2. Tragbare Elektronikvorrichtung nach Anspruch 1, wobei die Tastatur eine designierte Steuertaste (68) enthält und im Texteingabemodus der Prozessor konfiguriert ist, als Reaktion auf die Rotation des Scrollrades die Auf-Bildschirm-Positions-Angabe nur zu bewegen, wenn die designierte Steuertaste zur gleichen Zeit aktiviert ist, als das Scrollrad gedreht wird.

3. Tragbare Elektronikvorrichtung nach Anspruch 1, wobei im Texteingabemodus der Prozessor konfiguriert ist, das Leerzeichen zum Textfeld am aktuellen Eingabeort hinzuzufügen und als Reaktion auf ein Drücken des Scrollrades die Auf-Bildschirm-Positions-Angabe nur vorgeschoben wird, wenn die designierte Steuertaste zur gleichen Zeit nicht aktiviert ist, als das Scrollrad gedrückt wird.

4. Tragbare Elektronikvorrichtung nach Anspruch 1, wobei die Tastatur eine designierte Steuertaste enthält und, wenn die designierte Steuertaste gedrückt ist, der Prozessor dazu konfiguriert ist, ein Überlagerungsmenü (110) von auswählbaren Items veranlasst, einen Abschnitt einer aktuellen Benutzerschnittstelle zu überlagern, die auf dem Anzeigebildschirm angezeigt ist, wobei die Bewegung des Scrollrads zu entsprechender Bewegung einer Auf-Bildschirm-Positions-Angabe (116) durch das Überlagerungsmenü führt, wenn das Überlagerungsmenü angezeigt ist.

5. Tragbare Elektronikvorrichtung nach Anspruch 1, wobei die Tastatur eine QWERTY-Stil-Anordnung aufweist und das Scrollrad direkt unter den Tasten "V" und "B" der Tastatur positioniert ist.

6. Verfahren zum Betreiben einer tragbaren Elektronikvorrichtung (10) mit einem Vorrichtungsgehäuse, das eine Seite aufweist,
einem Anzeigebildschirm (72), der in der Seite angebracht ist,
einer Tastatur (32), die in der Seite an einer Stelle zwischen einer oberen Kante und einer unteren Kante der Seite und unter dem Anzeigebildschirm angebracht ist, wobei die Tastatur mehrere alphanumerische Tasten aufweist, die in mehreren Reihen über die Seite angeordnet sind, wobei die Tasten entsprechende Eingabesignale erzeugen, wenn sie aktiviert sind,
einer Scrollradbaugruppe (44), die ein Scrollrad enthält, das in der Seite an einem Leertastenort in Bezug auf die Tastatur angebracht ist, wobei das Scrollrad zum Drehen um eine Achse in eine erste Richtung zur oberen Kante der Seite und in eine entgegengesetzte zweite Richtung zur unteren Kante hin drehbar und drückbar angebracht ist, wobei die Scrollradbaugruppe einen Rotationssensor zur Rotationserfassung des Scrollrades in die erste oder die zweite Richtung und zum Erzeugen entsprechender Eingabesignale und einen Drücksensor zur Drückerfassung des Scrollrades und zum Erzeugen eines entsprechenden Eingabesignals enthält, und
einem Prozessor, der zum Steuern dessen Betriebs mit dem Anzeigebildschirm verbunden ist und der zum Empfangen der durch diese erzeugten Eingabesignale mit der Tastatur und der Scrollradbaugruppe verbunden ist,
wobei in dem Verfahren
in einem Texteingabemodus (i) mehrere Zeichen in einem Textfeld (80) auf dem Anzeigebildschirm angezeigt werden, (ii) eine Auf-Bildschirm-Positions-Angabe (78) auf dem Anzeigebildschirm an einem aktuellen Eingabeort im Anzeigefeld angezeigt wird, (iii) als Reaktion auf ein Drücken des Scrollrades ein Leerzeichen zum Textfeld am aktuellen Eingabeort hinzugefügt und die Auf-Bildschirm-Positions-Angabe vorgerückt wird und (iv) als Reaktion auf die Rotation des Scrollrades die Auf-Bildschirm-Positions-Angabe durch das Textfeld bewegt wird.

7. Computerlesbares Medium zum Speichern von Programmcode zum Veranlassen einer tragbaren Elektronikvorrichtung, ein Verfahren nach Anspruch 6 auszuführen.

## Revendications

1. Dispositif électronique portatif (10), comprenant :
un boîtier (62) de dispositif ayant une face (63) ;
un écran d'affichage (72) monté dans la face ;
un clavier (32) monté dans la face dans une position entre un bord supérieur et un bord inférieur de la face et sous l'écran d'affichage, le clavier comprenant une pluralité de touches alphanumériques (64) agencées en une pluralité de rangées à travers la face, les touches générant des signaux d'entrée correspondants lorsqu'elles sont activées ;
un ensemble de molette de défilement comprenant une molette de défilement montée dans la face dans un emplacement de touche de barre d'espace par rapport à la position du clavier plus proche du bord inférieur qu'au moins certaines touches alphanumériques, la molette de défilement étant montée en rotation et pouvant être enfoncée pour tourner autour d'un axe dans une première direction vers le bord supérieur de la face et dans une deuxième direction opposée vers le bord inférieur, l'ensemble de molette de défilement comprenant un capteur de rotation pour détecter la rotation de la molette de défilement dans les première et deuxième directions et pour générer des signaux d'entrée correspondants, et un capteur d'enfoncement pour détecter l'enfoncement de la molette de défilement et pour générer un signal d'entrée correspondant ; et
un processeur couplé à l'écran d'affichage pour commander son fonctionnement et couplé au clavier et à l'ensemble de molette de défilement pour recevoir les signaux d'entrée ainsi générés, le processeur destiné à, dans un mode d'entrée de texte : (i) afficher une pluralité de caractères dans une zone de texte (80) sur l'écran d'affichage ; (ii) afficher un indicateur (78) de position à l'écran sur l'écran d'affichage dans un emplacement d'entrée actuel dans la zone d'affichage ; (iii) ajouter un caractère d'espace à la zone de texte au niveau de l'emplacement d'entrée actuel et avancer l'indicateur de position à l'écran en réponse à l'enfoncement de la molette de défilement ; et (iv) déplacer l'indicateur de position à l'écran à travers la zone de texte en réponse à la rotation de la molette de défilement.

2. Dispositif électronique portatif tel que revendiqué dans la revendication 1, dans lequel le clavier comprend une touche (68) de commande désignée et dans le mode d'entrée de texte, le processeur est configuré pour déplacer l'indicateur de position à l'écran en réponse à la rotation de la molette de défilement uniquement lorsque la touche de commande désignée est activée en même temps que la molette de défilement est mise en rotation.

3. Dispositif électronique portatif tel que revendiqué dans la revendication 1, dans lequel dans le mode d'entrée de texte, le processeur est configuré pour ajouter le caractère d'espace à la zone de texte au niveau de l'emplacement d'entrée actuel et avancer l'indicateur de position à l'écran en réponse à l'enfoncement de la molette de défilement uniquement lorsque la touche de commande désignée n'est pas activée en même temps que la molette de défilement est enfoncée.

4. Dispositif électronique portatif tel que revendiqué dans la revendication 1 dans lequel le clavier comprend une touche de commande désignée et lorsqu'on appuie sur la touche de commande désignée, le processeur est configuré pour amener un menu en surimpression (110) d'articles sélectionnables à recouvrir une partie d'une interface utilisateur actuelle affichée sur l'écran d'affichage, où le mouvement de la molette de défilement résulte en un mouvement correspondant d'un indicateur (116) de position à l'écran au travers du menu en surimpression lorsque le menu en surimpression est affiché.

5. Dispositif électronique portatif tel que revendiqué dans la revendication 1, dans lequel le clavier a une configuration du type QWERTY et la molette de défilement est positionnée directement sous les touches "V" et "B" du clavier.

6. Procédé d'exploitation d'un dispositif électronique portatif (10) comprenant un boîtier de dispositif ayant une face, un écran d'affichage (72) monté dans la face ; un clavier (32) monté dans la face dans une position entre un bord supérieur et un bord inférieur de la face et sous l'écran d'affichage, le clavier comprenant une pluralité de touches alphanumériques agencées en une pluralité de rangées à travers la face, les touches générant des signaux d'entrée correspondants lorsqu'elles sont activées ; un ensemble (44) de molette de défilement comprenant une molette de défilement montée dans la face dans un emplacement de touche de barre d'espace par rapport au clavier, la molette de défilement étant montée en rotation et pouvant être enfoncée pour tourner autour d'un axe dans une première direction vers le bord supérieur de la face et dans une deuxième direction opposée vers le bord inférieur, l'ensemble de molette de défilement comprenant un capteur de rotation pour détecter la rotation de la molette de défilement dans les première et deuxième directions et pour générer des signaux d'entrée correspondants, et un capteur d'enfoncement pour détecter l'enfoncement de la molette de défilement et pour générer un signal d'entrée correspondant ; et un processeur couplé à l'écran d'affichage pour commander son fonctionnement et couplé au clavier et à l'ensemble de molette de défilement pour recevoir les signaux d'entrée ainsi générés, le procédé comprenant :
dans un mode d'entrée de texte : (i) le fait d'afficher une pluralité de caractères dans une zone de texte sur l'écran d'affichage ; (ii) le fait d'afficher un indicateur (78) de position à l'écran sur l'écran d'affichage dans un emplacement d'entrée actuel dans la zone de texte ; (iii) le fait d'ajouter un caractère d'espace à la zone d'affichage au niveau de l'emplacement d'entrée actuel et d'avancer l'indicateur de position à l'écran en réponse à l'enfoncement de la molette de défilement ; et (iv) le fait de déplacer l'indicateur de position à l'écran à travers la zone de texte en réponse à la rotation de la molette de défilement.

7. Support lisible par ordinateur stockant un code de programme pour amener un dispositif électronique portatif à exécuter le procédé de la revendication 6.
